(19) Europäisches Patentamt
European Patent Office
Office européen des brevets

(11) **EP 1 471 176 B1**

(12) **EUROPEAN PATENT SPECIFICATION**

(45) Date of publication and mention
of the grant of the patent:
**23.03.2016 Bulletin 2016/12**

(21) Application number: **03700545.1**

(22) Date of filing: **14.01.2003**

(51) Int Cl.:
*D04H 3/16* (2006.01)     *B01D 39/14* (2006.01)
*D06M 10/00* (2006.01)     *D06M 11/05* (2006.01)
*D06M 23/06* (2006.01)     *B01D 39/16* (2006.01)
*D04H 1/42* (2012.01)

(86) International application number:
**PCT/JP2003/000185**

(87) International publication number:
**WO 2003/060216 (24.07.2003 Gazette 2003/30)**

(54) **PROCESS FOR PRODUCING ELECTRET**

VERFAHREN ZUR HERSTELLUNG VON ELEKTRET

PROCEDE DE PRODUCTION D'ELECTRET

(84) Designated Contracting States:
**AT BE BG CH CY CZ DE DK EE ES FI FR GB GR
HU IE IT LI LU MC NL PT SE SI SK TR**

(30) Priority: **11.01.2002   JP 2002005232**

(43) Date of publication of application:
**27.10.2004   Bulletin 2004/44**

(73) Proprietor: **JAPAN VILENE COMPANY, LTD.
Tokyo 101-8614 (JP)**

(72) Inventors:
• **AKIBA, Osamu
Sashima-gun,
Ibaraki 306-0213 (JP)**

• **MATSUBAYASHI, Akihiro
Sashima-gun,
Ibaraki 306-0213 (JP)**
• **NAGASHIMA, Masaaki
Moriyama-shi,
Shiga 524-0041 (JP)**

(74) Representative: **Cohausz & Florack
Patent- & Rechtsanwälte
Partnerschaftsgesellschaft mbB
Postfach 10 18 30
40009 Düsseldorf (DE)**

(56) References cited:
**WO-A1-01/27371     JP-A- 2002 161 467
US-A- 5 665 278     US-A- 5 908 598**

**Description**

TECHNICAL FIELD

The present invention relates to a process for manufacturing an electret article.

BACKGROUND ART

A nonwoven fabric filter has been used to capture dust in a gas. Nonwoven fabric filters capture dust or the like mainly by physical functions such as Brownian diffusion, an interruption, or an inertial impaction. Therefore, a nonwoven fabric filter made of finer fibers can capture and remove finer dust, and thus improve the dust collection efficiency. Nevertheless, there is a problem in that the pressure loss is increased as the fiber diameter of the nonwoven fabric filter is reduced, and thus, the lifetime of the nonwoven fabric filter is shortened.

As a method for solving the above problem, an attempt to achieve both an enhancement of the collection efficiency and a reduction of the pressure loss was conducted by the electrical charging of the nonwoven fabric filter to thereby utilize a static electric function in addition to the physical functions. For example, WO01/27371A1 (Patent Document 1) discloses a method and an apparatus for electrical charging of the individual fibers by spraying a sufficient amount of polar liquid onto a nonconductive polymer before forming a fiber web, collecting the fibers to form a nonwoven web, and then drying the web. According to this method and the apparatus, an electret article can be obtained without applying an electric field, by spraying of the polar liquid directly onto the individual fibers before forming the fiber web and drying the individual fibers.

The method and the apparatus disclosed in the Patent Document 1 has advantageous effects in that a large amount of electrical charge can be acquired, and after the fiber web is formed, a procedure for electrically charging the resulting fiber web is not required to obtain an electret web. Nevertheless, in the method and the apparatus, the nonconductive polymer must be thoroughly saturated with the polar liquid to be electrically charged, and thus, the drying step is required. This means that a large amount of energy is required for the drying.

US 5,665,278 describes an apparatus for meltblowing a plurality of side-by-side molten or semi-molten fibers. WO 01/27371 A1 describes a method of making a nonwoven fibrous electret web which comprises forming one or more free-fibers from a nonconductive polymeric fiber-forming material, spraying an effective amount of polar liquid onto the free-fibers, collecting the free-fibers to form a nonwoven fibrous electret web.

The inventors of the present invention engaged in intensive research to overcome the above disadvantages of the prior art and, as a result, found that an electret article having a large amount of electrical charge can be produced through a simple process without the need of a large amount of energy for drying.

The present invention is based on the above findings.

DISCLOSURE OF THE INVENTION

The present invention relates to a process for manufacturing an electret article, comprising passing melt-extruded thermoplastic resin fibers through a mist space substantially formed from droplets of a polar liquid, and then collecting the fibers, wherein the thermoplastic resin fibers contain electrical-chargeability enhancing agents, and the average diameter of the droplets is less than 20 $\mu$m.

The present inventors found that, according to the process of the present invention as above, a large amount of electrical charge can be imparted by passing the extruded thermoplastic resin fibers containing electrical-chargeability enhancing agents through the mist space formed from the droplets of a polar liquid, and a drying procedure becomes unnecessary because an average diameter of the droplets used is less than 20 $\mu$m, and thus, the thermoplastic resin fibers are not wetted. It is believed that smaller droplets have a higher surface tension, and thus, do not wet the thermoplastic resin fibers.

Therefore, in a preferred embodiment of the process of the present invention, the thermoplastic resin fibers are not subjected to a drying step after passing through the mist space.

In another preferred embodiment of the process of the present invention, a resin-droplet percentage of the formula:

$$(Wp/Wf) \times 100$$

wherein Wp denotes the amount of the droplets forming the mist space and sprayed to a unit volume thereof within a certain period of time, and Wf denotes the amount of the melt-extruded thermoplastic resin passed through the mist space within a certain period of time, is 500 or more. The present inventors also found that, when the resin-droplet percentage is 500 or more, that is, the amount of the droplets in the mist space is relatively large with respect to the amount of the thermoplastic resin, a large amount of electrical charge can be imparted.

In still another preferred embodiment of the process of the present invention, a heated gas is blown onto the melt-extruded thermoplastic resin fibers. In this embodiment, the fibers are drawn and become finer. Thus, an electret article formed from finer fibers, and accordingly having enhanced properties, can be obtained. For example, an electret article having a high collection efficiency, an electret article having an excellent feeling, an electret article having an excellent separating performance, or an electret article having an excellent masking property can be produced.

In still another preferred embodiment of the process of the present invention, a volume specific resistivity of the thermoplastic resin is $10^{14}$ $\Omega \cdot$cm or higher, particularly $10^{16}$ $\Omega \cdot$cm or higher. In this embodiment, the amount of electrical charge can be increased.

In still another preferred embodiment of the process of the present invention, the polar liquid is water. In this embodiment, the environment wherein the electret article is produced becomes good.

In still another preferred embodiment of the process of the present invention, the electrical-chargeability enhancing agent is at least one compound selected from a group consisting of a hindered amine compound, a metallic salt of a fatty acid, a metallic oxide, and an unsaturated carboxylic acid-modified high-molecular compound. In this embodiment, the amount of electrical charge can be remarkably increased.

In still another preferred embodiment of the process of the present invention, the average diameter of the droplets is 15 $\mu$m or less. In this embodiment, the amount of electrical charge can be further increased. This is because the number of droplets can be increased under the condition of the same total amount of droplets.

An apparatus for manufacturing an electric article, comprises (1) a means for melt-extruding a thermoplastic resin containing an electrical-chargeability enhancing agent to form thermoplastic resin fibers; (2) a means for spraying droplets consisting essentially of a polar liquid to a space downstream of a direction of said thermoplastic resin extruded from said means for melt-extruding said thermoplastic resin, to thereby form a mist space, the average diameter of said droplets being less than 20 $\mu$m; and (3) a means for collecting said thermoplastic resin fibers which have been passed through said mist space.

BRIEF DESCRIPTION OF THE DRAWINGS

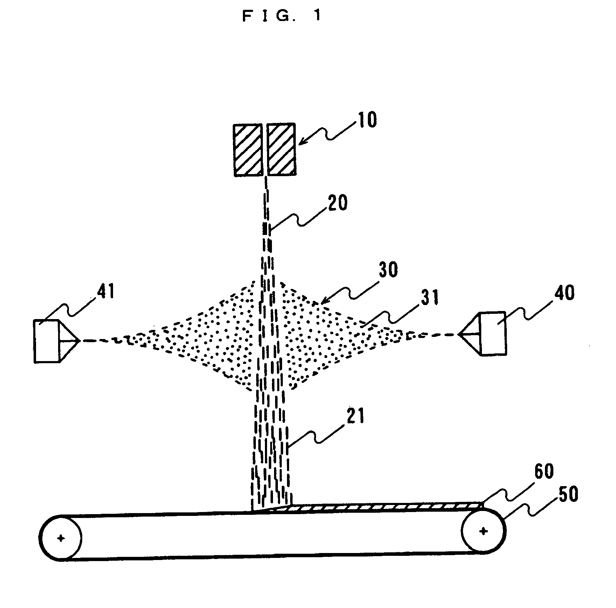

Figure 1 is a schematic sectional view of an apparatus for manufacturing an electret article according to the present invention.

BEST MODE FOR CARRYING OUT THE INVENTION

The process and the apparatus of the present invention will be described, referring to Fig. 1, i.e., a schematic sectional view of an apparatus for manufacturing an electret article according to the present invention.

A melted resin is first extruded from a melt-extruding apparatus 10 in the form of fibers. The thermoplastic resin is supplied from a vessel (not shown) for supplying the thermoplastic resin to the melt-extruding apparatus 10, to which electrical-chargeability enhancing agents are supplied from a vessel (not shown) for supplying the electrical-chargeability enhancing agent. Thus, the thermoplastic resin fibers 20 contain the electrical-chargeability enhancing agents. When the thermoplastic resin contains the electrical-chargeability enhancing agents, it is not necessary to supply the electrical-chargeability enhancing agents to the thermoplastic resin. Alternatively, the thermoplastic resin can be mixed with the electrical-chargeability enhancing agents before or after supplied to the melt-extruding apparatus 10. As above, the thermoplastic resin fibers 20 contain the electrical-chargeability enhancing agents. Therefore, an electret article 60 having a large amount of electrical charge can be produced, according to the present invention. The thermoplastic resin fibers 20 are supplied to and passed through a mist space 30 formed from droplets 31 of a polar liquid. The thermoplastic resin fibers 20 are electrically charged when passed through the mist space 30. It is believed that the droplets 31 of a polar liquid which droplets form the mist space 30 have an average diameter of 20 $\mu$m or less and so have a higher surface tension, and thus, the thermoplastic resin fibers 20 are not wetted. Therefore, it is possible to omit a procedure for drying the thermoplastic resin fibers 20 in the present invention.

The mist space 30 is formed from the droplets 31 sprayed from a droplets-spraying apparatus 40. When the amount of the droplets sprayed is larger than that of the thermoplastic resin fibers 20 extruded, an electret article 60 having a larger amount of electrical charge can be produced. The resulting electrically-charged thermoplastic resin fibers 21 are collected by a belt conveyer 50 located under the melt-extruding apparatus 10, whereby the electret article 60 is formed thereon. The electret article 60 is not wetted, and thus can be used as an electret product without being dried, or can be supplied to subsequent steps for processing for other applications without being dried.

The thermoplastic resin which may be used in the present invention is not particularly limited, so long as it may be extruded. Preferably, the thermoplastic resin is made of a resin having a volume specific resistivity of $10^{14}$ $\Omega \cdot$cm or

higher, more preferably $10^{16}$ Ω·cm or higher. Such a resin can result in the increase of the amount of electrical charge. There is no upper limit of the volume specific resistivity. The term "volume specific resistivity" as used herein is a value determined by a measuring apparatus of a volume specific resistivity, which apparatus is used in an insulation resistance test by a three-terminals method in accordance with a "Testing method for thermosetting plastics" prescribed in JIS K6911.

Specifically, the thermoplastic resin is, for example, a polyolefin-based resin, such as a polyethylene-based resin, polypropylene-based resin, polymethylpentene-based resin, or polystyrene-based resin, polytetrafluoroethylene, polyvinylidene chloride, polyvinyl chloride, polyurethane, or the like. In these resins, the polyolefin-based resin is preferably used, because it has a high volume specific resistivity, and has an easy-processing property because of a thermoplasticity thereof. The polypropylene-based resin, or polymethylpentene-based resin is more preferably used, because it has an excellent heat resistance.

In the present invention, the amount of electrical charge can be increased by the electrical-chargeability enhancing agents contained in the thermoplastic resin. The electrical-chargeability enhancing agent is not particularly limited, so long as it can increase the amount of electrical charge in an article containing itself. More particularly, an electret article containing a certain compound and an electret article not containing the same compound are produced by the process of the present invention. When the amount of electrical charge in the electret article containing the compound is increased in comparison with that of electrical charge in the electret article not containing the compound, the compound can be determined as the electrical-chargeability enhancing agent.

A preferred electrical-chargeability enhancing agent used in the present invention is, for example, a hindered amine compound, a metallic salt of a fatty acid, for example, a metallic salt of a fatty acid having 10 to 30 carbon atoms, such as magnesium stearate or aluminum stearate, or the like, a metallic oxide, such as titanium oxide, silicon dioxide, a naturally-occurring mineral, and an unsaturated carboxylic acid-modified high-molecular compound, such as polyethylene, polypropylene, or polystyrene modified by an unsaturated carboxylic acid having 3 to 10 carbon atoms, such as acrylic acid, methacrylic acid, or maleic acid. The electrical-chargeability enhancing agent as above can be used alone, or in combination thereof. Of these compounds, the hindered amine compound can particularly increase the amount of electrical charge, and thus is preferable.

The hindered amine compound is, for example, poly[{(6-(1,1,3,3-tetramethylbutyl)imino-1,3,5-triazine-2,4-diyl)}{(2,2,6,6-tetramethyl-4-piperidyl)imino}hexamethylene{(2,2,6,6-tetramethyl-4-piperidyl)imino}}], or dimethyl succinate-1-(2-hydroxyethyl)-4-hydroxy-2,2,6,6-tetramethylpiperidine polycondensate, or 2-(3,5-di-t-butyl-4-hydroxybenzyl)-2-n-butyl malonic acid bis(1,2,2,6,6-pentamethyl-4-piperidyl)

The amount of the electrical-chargeability enhancing agents contained in the thermoplastic resin is not particularly limited, but is preferably 0.01 to 5 mass% with respect to the total mass of the thermoplastic resin and the electrical-changeability enhancing agent. When the amount of the electrical-chargeability enhancing agent is less than 0.01 mass%, the amount of electrical charge might be insufficient. Thus, the amount is more preferably 0.05 mass% or more, or most preferably 0.1 mass% or more. When the amount of the electrical-chargeability enhancing agent is more than 5 mass%, a physical strength of the electret article might be lowered. Thus, the amount is more preferably 4 mass% or less, or still more preferably 3 mass% or less, or most preferably 2.5 mass% or less.

According to the process of the present invention, the thermoplastic resin containing an electrical-chargeability enhancing agent can be melted and extruded in the form of fibers from the melt-extruding apparatus. The melt-extrusion may be carried out by simple extruding of the thermoplastic resin fibers 20 from the melt-extruding apparatus 10 as shown in Fig. 1. Alternatively, a heated gas may be blown onto, or an electric field may be applied to, the melt-extruded thermoplastic resin fibers after extrusion from the melt-extruding apparatus 10. The blowing of the heated gas, or the application of the electric field, is preferably carried out before passing the fibers through the mist space.

When the fibers are simply extruded from the melt-extruding apparatus, a conventional die such as that used in a spun-bonding method may be used. When a heated gas is blown after extrusion from the melt-extruding apparatus, a conventional die such as that used in a melt-blowing method may be used. When an electric field may be applied after extrusion from the melt-extruding apparatus, a conventional die such as that used in an electrostatically extruding method may be used. In these methods, the method of blowing a heated gas is preferable, because the fibers are drawn and fined, and thus many properties are improved. For example, an electret article having a high collection efficiency, an electret article having an excellent feeling, an electret article having an excellent separating performance, or an electret article having an excellent masking property can be produced.

The temperature of the blowing gas is higher than the melting point of the thermoplastic resin, and lower than a decomposition temperature of the thermoplastic resin. The amount of the heated blowing gas is not particularly limited, but is preferably 5-fold to 2000-fold (mass) larger than the mass of the thermoplastic resin extruded. The gas is not particularly limited, but preferably air is used in view of the manufacturing environment of the article.

As shown in Fig. 1, the thermoplastic resin fibers 20 melt-extruded from the melt-extruding apparatus 10 are electrically charged by passing through the mist space 30 formed from the droplets 31 of the polar liquid. When passing, an electric field may or may not be applied to the mist space. Electrical charge may be imparted without applying an electric field. The polar liquid used to form the droplets is not particularly limited, but for example, is water, alcohol, acetone, ammonia, or the like. The polar liquid as above may be used alone, or in a combination thereof. From the point of view of the manufacturing environment, it is preferable to use water, particularly, only water.

In the process for manufacturing an electret article according to the present invention, a drying procedure can be omitted, by fining an average diameter of the droplets used to less than 20 $\mu$m. The reason why the thermoplastic resin fibers are not wetted is unclear, when the average diameter of the droplets is less than 20 $\mu$m. The present inventors believe that smaller droplets have a higher surface tension, and thus, do not wet the thermoplastic resin fibers when in contact therewith. Therefore, it is supposed that the tendency not to wet the thermoplastic resin fibers would be strengthened as the surface tension is increased. Therefore, the average diameter of the droplets is preferably 15 $\mu$m or less, more preferably 12 $\mu$m or less. Further, it is supposed that if the average diameter of the droplet becomes smaller in the mist space formed from a given mass of the droplets, the number of droplets acting on the thermoplastic resin fibers is increased, and thus, the amount of electrical charge can be further increased. There is no lower limit of the average diameter of the droplets, but the average diameter is suitably about 0.1 $\mu$m. When the average diameter is smaller than 0.1 $\mu$m, the amount of electrical charge is liable to be lowered. The term "average diameter of the droplets" as used herein means a Sauter's mean diameter obtained by a measure using a laser Doppler particle size distribution measuring equipment.

The mist space used in the present invention may be formed from a number of droplets floating or hanging as a mass in a spatial area; preferably a mist space formed from a number of droplets moving in a given direction or in various directions; or a mist space formed from floating and moving droplets. The mist space may be formed by a commercially available droplets-spraying apparatus, such as an atomizer of "AKIMist" (tradename; Ikeuchi Co., Ltd.) or "AKIJet" (tradename; Ikeuchi Co., Ltd.).

In the process of the present invention, the thermoplastic resin fibers may be passed through the mist space in any direction. However, it is preferable that the thermoplastic resin fibers are passed through the mist space in a direction perpendicular to the spraying direction of the droplets from the droplets-spraying apparatus, because the amount of electrical charge can be increased.

In the process of the present invention, the resin-droplet percentage of the formula:

$$(Wp/Wf) \times 100$$

is preferably 500 or more. When the resin-droplet percentage is 500 or more, the amount of electrical charge can be increased. It is believed that this is because the number of the droplets acting on the thermoplastic resin fibers is increased. Further, as mentioned above, if the average diameter of the droplet becomes smaller in the mist space formed from a given mass of the droplets, the number of the droplets acting on the thermoplastic resin fibers is increased, and thus, the amount of electrical charge can be increased. The effect of increasing the amount of electrical charge becomes more excellent, as the value of the resin-droplet percentage is increased, and thus, the resin-droplet percentage is more preferably 600 or more, particularly preferably 700 or more, most preferably 1000 or more. There is no upper limit of the resin-droplet percentage, but is preferably a value at which the thermoplastic resin fibers are not wetted. Such an upper limit of the resin-droplet percentage at which the thermoplastic resin fibers are not wetted may be experimentally determined, if necessary.

The resin-droplet percentage can be suitably obtained by adjusting the amount of the fibers extruded from the melt-extruding apparatus 10 and the amount of the droplets sprayed from the droplets-spraying apparatus 40, as shown in Fig. 1. The number of the droplets-spraying apparatus used to form the mist space is not particularly limited. For example, two droplets-spraying apparatuses 40, 41 may be placed as shown in Fig. 1, or one apparatus or three or more apparatuses may be used. When two or more droplets-spraying apparatuses are used, various conditions, such as the average diameter of the droplets, the amount of the droplets, the velocity of the droplets, or properties or kinds of the polar liquid may be applied.

In the process of the present invention, as shown in Fig. 1, the electret article 60 can be manufactured by passing the thermoplastic resin fibers 20 through the mist space 30 as shown above to electrically charge the fibers 20, and collecting the electrically charged thermoplastic resin fibers 21 on a suitable support, such as a belt conveyer 50. The resulting electret article 60 is not wetted, and therefore, it is possible to omit a drying procedure after the thermoplastic resin fibers 20 are passed through the mist space, in the present invention. The expression "the drying procedure is not necessary" as used herein means that, for example in the embodiment as shown in Fig. 1, a procedure for drying an electret (i.e., electrically charged) thermoplastic resin fibers 21 before collecting or an electret (i.e., electrically charged) article 60 after collecting is not necessary. Further, for example, in the embodiment wherein the heated gas is blown onto the thermoplastic resin fibers 20 from the melt-blowing apparatus, the above expression means that a drying procedure is not necessary after the thermoplastic resin fibers are passed through the mist space. The unnecessity of the drying step may bring about additional advantageous effects. For example, if an electrically charged article is dried by heating to enhance productivity, the amount of electrical charge may be lowered. Nevertheless, the present invention does not have such a defect.

The collecting means are not particularly limited. For example, the belt conveyer 50 as shown in Fig. 1, or a roller may be used. Further, the collecting means such as the belt conveyer or the roller used may be porous or nonporous. When a porous collecting means such as the belt conveyer or the roller is used, a suction apparatus may be placed under the collecting means such as the belt conveyer or the roller to suck the electret (or electrically charged) thermoplastic resin fibers and prevent disturbance of the electret article. The surface of the collecting means such as the belt conveyer or the roller may be a plane or curved, or alternatively have other three-dimensional shapes. When the collecting means such as the belt conveyer or the roller has such a three-dimensional surface, the electrically charged thermoplastic resin fibers are collected in the form of the three-dimensional shape, and thus a forming procedure may be omitted after the collection. Further, for example, a porous or nonporous material may be located on the collecting means such as the belt conveyer or the roller, and it can be easily integrated with the electret article. An example of the porous material is a sheet such as a woven fabric, knitted fabric, nonwoven fabric, or a complex thereof, a porous film such as a perforated film, a foam, or a complex thereof. An example of the nonporous material is a nonporous film.

A shape, a form, or a condition of the electret article varies with those of the thermoplastic resin fibers. The electret article may be a fibrous aggregate (or web) or a film. When the electret article is used as a gas filter, which is a preferred embodiment of the present invention, the electret article is preferably a fibrous aggregate, more preferably a melt-blown fibers aggregate or web formed from fine fibers and having an excellent collection efficiency.

The electret article manufactured by the process according to the present invention contains a large amount of electrical charge, and thus may be used, for example, as a gas filter for air or the like, a liquid filter for oil, water, or the like, a filter for a mask such as a mold mask, a medical material for recovering or improving healthy, a wiping material, dust-proof clothing, a sensor element of a sonic wave or vibration, or in other applications.

The electret article manufactured by the process according to the present invention may be used in the various applications as above, and subsequent processing may be carried out depending on the applications. For example, when the electret article is used as a gas filter, which is a preferred embodiment of the present invention, the electret article is preferably pleated to broaden a filterable area thereof.

EXAMPLES

The present invention now will be further illustrated by, but is by no means limited to, the following Examples.

Example 1

A starting resin was a polypropylene pellet containing 1 mass% poly[{(6-(1,1,3,3-tetramethylbutyl)imino-1,3,5-triazine-2,4-diyl){(2,2,6,6-tetramethyl-4-piperidyl)imino}hexamethylene{(2,2,6,6-tetramethyl-4-piperidyl)imino}}], [a hindered amine based electrical-chargeability enhancing agent: CHIMASSORB 944FD (trade name); Chiba Specialty Chemicals Co., Ltd.] with respect to a total mass of the resin and the agent. The volume specific resistivity of the polypropylene was higher than $10^{14}\Omega\cdot$cm. The polypropylene pellet was melt-blown by a usual melt-blowing apparatus while an air having a temperature of 300°C was blown onto the fibers, to obtain melt-blown fibers. A mass of the air blown was 1500 times (mass) the mass of polypropylene.

The resulting melt-blown fibers were passed through a mist space to obtain electret melt-blown fibers while being spun from the melt-blowing apparatus. The mist space was formed from droplets sprayed from a droplet-spraying apparatus [AKIMist (trade name); Ikeuchi Co., Ltd.]. The average diameter of the droplets sprayed from the droplet-spraying apparatus was 10 $\mu$m. The mist space was formed at a downstream side from the position where the heated air was blown. The mist space had a resin-droplet percentage of 1150, and a variation coefficient of 0.05.

The electret melt-blown fibers were collected on a belt conveyer made of a stainless steel mesh without a drying step while being sucked from the opposite side of the belt conveyer, to thereby obtain electret melt-blown fibers web having an average fiber diameter of 5 $\mu$m, i.e., an electret article.

Example 2

A starting resin was a polypropylene pellet containing 3 mass% hindered amine based electrical-chargeability enhancing agent as used in Example 1, with respect to a total mass of the resin and the electrical-chargeability enhancing agent. The volume specific resistivity of the polypropylene was higher than $10^{14}$ $\Omega\cdot$cm. The polypropylene pellet was melt-blown by a usual melt-blowing apparatus while an air having a temperature of 260°C was blown onto the fibers, to obtain melt-blown fibers. A mass of the air blown was 50 times (mass) the mass of the polypropylene.

The resulting melt-blown fibers were passed through a mist space to obtain electret melt-blown fibers while being spun from the melt-blowing apparatus. The mist space was formed from droplets sprayed from the droplet-spraying apparatus used in Example 1. An average diameter of the droplets sprayed from the droplet-spraying apparatus was 10 $\mu$m. The mist space was formed at a downstream side from the position where the heated air was blown. The mist space had a resin-droplet percentage of 750, and a variation coefficient of 0.05.

The electret melt-blown fibers were collected on a belt conveyer made of a stainless steel mesh without a drying step while being sucked from the opposite side of the belt conveyer, to thereby obtain electret melt-blown fibers web having an average fiber diameter of 7 $\mu$m, i.e., an electret article.

Comparative Example 1

The procedures of Example 1 were repeated except that an average diameter of the droplets sprayed from a droplet-spraying apparatus was 30 $\mu$m. However, the melt-blown fibers collected on the conveyer were thoroughly saturated with water, and a drying step was required.

Comparative Example 2

The procedures of Example 1 were repeated except that a polypropylene pellet without a hindered amine was used, to obtain an electret article without a drying step.

Comparative Example 3

The procedures of Example 1 were repeated except that a polypropylene pellet without a hindered amine was used, and the fibers were not passed through the mist space, to obtain a web of the melt-blown fibers without a drying step.

Evaluation of properties

(1) Measurement of collection efficiency

An efficiency to collect atmospheric airborne duct having a diameter of 0.3 to 0.5 $\mu$m by each of the electret articles of Examples 1 and 2 and Comparative Example 2 and the melt-blown fibers web of Comparative Example 3 was measured, using air at an air velocity of 10 cm/second. The results are listed in Table 1. The melt-blown fibers web of Comparative Example 1 were thoroughly saturated when collected, and thus, a drying step was required. Therefore, a collection efficiency thereof could not be measured.

(2) Measurement of pressure loss

A pressure loss of each of the electret articles of Examples 1 and 2 and Comparative Example 2 and the melt-blown fibers web of Comparative Example 3 was measured, using an atmospheric air at an air velocity of 10 cm/second. The results are listed in Table 1. The melt-blown fibers web of Comparative Example 1 were thoroughly saturated when collected, and thus, a drying step was required. Therefore, a pressure loss thereof could not be measured.

(3) Calculation of $\gamma$ value

A penetration percentage (P; unit = %) was calculated from the collection efficiency (E; unit = %) obtained as above by an equation: P = 100 - E. Then, a $\gamma$ value (unit = 1/Pa) was calculated from the resulting penetration percentage (P; unit = %) and the pressure loss ($\Delta$P; unit = Pa) obtained as above by an equation:

$$\gamma = [-\ln(P/100)]/\Delta P.$$

The results are listed in Table 1. An electret article having a larger $\gamma$ value has a smaller pressure loss and thus a smaller penetration percentage. Therefore, an electret article having a large $\gamma$ value can be preferably used as an excellent filter.

Table 1

| | Mass per unit area (g/m$^2$) | Thickness (mm) | Collection efficiency (%) | Pressure loss (Pa) | $\gamma$ (1/Pa) |
|---|---|---|---|---|---|
| Example 1 | 44 | 0.98 | 99.79 | 26 | 0.237 |
| Example 2 | 20 | 0.3 | 63.0 | 3.6 | 0.276 |
| Comparative Example 1 | Immeasurable because of saturated condition of the melt-blown fibers aggregate | | | | |
| Comparative Example 2 | 46 | 0.76 | 31.88 | 34 | 0.011 |
| Comparative Example 3 | 45 | 0.86 | 25.45 | 32 | 0.009 |

As apparent from Table 1, the electret articles produced by the process of the present invention had an excellent collection efficiency, despite a lower pressure loss in comparison with that of the melt-blown fibers web of Comparative Examples 2 and 3. Therefore, it is assumed that electret articles produced by the process of the present invention had a large amount of electrical charge.

INDUSTRIAL APPLICABILITY

According to the present invention, an electret article having a large amount of electrical charge can be produced by a simple process without a drying step.

When the resin-droplet percentage.of the formula (Wp/Wf) x 100 is 500 or more in the process of the present invention, the amount of electrical charge can be increased.

If the heated gas is blown onto the melt-extruded thermoplastic resin fibers in the process of the present invention, the fibers are drawn and become fine. Thus, an electret article formed from fine fibers and having enhanced properties can be obtained.

When the volume specific resistivity of the thermoplastic resin is $10^{14}$ $\Omega\cdot$cm or higher, particularly $10^{16}$ $\Omega\cdot$cm or higher, in the process of the present invention, the amount of electrical charge can be increased.

When the polar liquid is water in the process of the present invention, the environment wherein the electret article is produced becomes good.

When the electrical-chargeability enhancing agent is at least one compound selected from a group consisting of a hindered amine compound, a metallic salt of a fatty acid, a metallic oxide and an unsaturated carboxylic acid-modified high-molecular compound, in the process of the present invention, the amount of electrical charge can be remarkably increased.

When the average diameter of the droplet is 15 $\mu$m or less in the process of the present invention, the amount of electrical charge can be further increased. This is because the number of droplets can be increased under the condition of same total amount of droplets.

With the apparatus an electret article having a large amount of electrical charge can be produced by a simple apparatus without a drying means.

**Claims**

1.    A process for manufacturing an electret article, comprising passing melt-extruded thermoplastic resin fibers through a mist space substantially formed from droplets of a polar liquid, and then collecting the fibers, wherein said thermoplastic resin fibers contain electrical-chargeability enhancing agents, and the average diameter of said droplets is less than 20 $\mu$m.

2.    The process according to claim 1, wherein the thermoplastic resin fibers are not subjected to a drying step after passing through said mist space.

3.    The process according to claim 1 or 2, wherein a resin-droplet percentage of the formula:

$$(Wp/Wf) \times 100$$

wherein Wp denotes the amount of said droplets forming said mist space and sprayed to a unit volume thereof within a certain period of time, and Wf denotes the amount of said melt-extruded thermoplastic resin passed through said mist space within a certain period of time is 500 or more.

4. The process according to any one of claims 1 to 3, wherein a heated gas is blown onto said melt-extruded thermoplastic resin fibers and wherein the temperature of the blowing gas is higher than the melting point of the thermoplastic resin, and lower than the decomposition temperature of the thermoplastic resin.

5. The process according to any one of claims 1 to 4, wherein a volume specific resistivity of said thermoplastic resin is $10^{14}$ $\Omega \cdot$cm or higher.

6. The process according to claim 5, wherein a volume specific resistivity of said thermoplastic resin is $10^{16}$ $\Omega \cdot$cm or higher.

7. The process according to any one of claims 1 to 6, wherein said polar liquid is water.

8. The process according to any one of claims 1 to 7, wherein said electrical-chargeability enhancing agent is at least one compound selected from a group consisting of a hindered amine compound, a metallic salt of a fatty acid, a metallic oxide, and an unsaturated carboxylic acid-modified high-molecular compound.

9. The process according to any one of claims 1 to 8, wherein the average diameter of said droplets is 15 $\mu$m or less.

**Patentansprüche**

1. Verfahren zur Herstellung eines Elektret-Artikels, umfassend das Leiten von schmelzextrudierten thermoplastischen Harzfasern durch einen Nebelraum, der im Wesentlichen von Tröpfchen einer polaren Flüssigkeit gebildet ist, und dann das Sammeln der Fasern, worin diese thermoplastischen Harzfasern die elektrische Aufladbarkeit verstärkende Mittel enthalten und der mittlere Durchmesser dieser Tröpfchen kleiner als 20 $\mu$m ist.

2. Das Verfahren nach Anspruch 1, worin die thermoplastischen Harzfasern keinem Trocknungsschritt unterzogen werden, nachdem diese durch den Nebelraum geleitet wurden.

3. Das Verfahren nach Anspruch 1 oder 2, worin ein Prozentsatz der Harztröpfchen der Formel:

$$(Wp / Wf) \times 100$$

worin Wp die Menge der Tröpfchen bezeichnet, die den Nebelraum bilden und in eine Volumeneinheit davon innerhalb einer bestimmten Zeitperiode gesprüht werden, und Wf die Menge des schmelzextrudierten thermoplastischen Harzes bezeichnet, das innerhalb einer bestimmten Zeitdauer, welche 500 oder mehr ist, durch den Nebelraum geleitet wird.

4. Das Verfahren nach einem der Ansprüche 1 bis 3, worin ein erwärmtes Gas auf die schmelzextrudierten thermoplastischen Harzfasern eingeblasen wird und worin die Temperatur des eingeblasenen Harzes höher ist, als der Schmelzpunkt des thermoplastischen Harzes und kleiner als die Zersetzungstemperatur des thermoplastischen Harzes.

5. Das Verfahren nach einem der Ansprüche 1 bis 4, worin ein volumenspezifischer Widerstand des thermoplastischen Harzes $10^{14}$ $\Omega$*cm oder höher beträgt.

6. Verfahren nach Anspruch 5, worin ein volumenspezifischer Widerstand dieses thermoplastischen Harzes $10^{16}$ $\Omega$*cm oder höher beträgt.

**7.** Das Verfahren nach einem der Ansprüche 1 bis 6, worin die polare Flüssigkeit Wasser ist.

**8.** Das Verfahren nach einem der Ansprüche 1 bis 7, worin das die elektrische Aufladbarkeit verstärkende Mittel wenigstens eine Verbindung, ausgewählt aus einer Gruppe, bestehend aus einer gehinderten Aminverbindung, einem Metallsalz einer Fettsäure, einem Metalloxid und einer ungesättigten Carbonsäuremodifizierten hochmolekularen Verbindung, ist.

**9.** Das Verfahren nach einem der Ansprüche 1 bis 8, worin der mittlere Durchmesser der Tröpfchen 15 $\mu$m oder weniger beträgt.


**Revendications**

**1.** Procédé de préparation d'un article en électret, comprenant le passage de fibres en résine thermoplastique extrudées à l'état fondu dans un espace de brouillard sensiblement formé de gouttelettes d'un liquide polaire, puis la collecte des fibres, où lesdites fibres en résine thermoplastique contiennent des agents amplifiant la chargeabilité électrique, et le diamètre moyen desdites gouttelettes est inférieur à 20 $\mu$m.

**2.** Procédé selon la revendication 1, où les fibres en résine thermoplastique ne sont pas soumises à une étape de séchage après être passées dans ledit espace de brouillard.

**3.** Procédé selon la revendication 1 ou 2, où le pourcentage résine/gouttelette de formule :

$$(Wp/Wf) \times 100$$

où Wp représente la quantité des gouttelettes formant ledit espace de brouillard et pulvérisées par unité de volume de celui-ci en une certaine période, et Wf représente la quantité de ladite résine thermoplastique extrudée à l'état fondu passée dans ledit espace de brouillard en une certaine période, se situe à 500 ou plus.

**4.** Procédé selon l'une quelconque des revendications 1 à 3, où un gaz chauffé est soufflé sur lesdites fibres en résine thermoplastique extrudée à l'état fondu et où la température du gaz soufflé est supérieure au point de fusion de la résine thermoplastique, et inférieure à la température de décomposition de la résine thermoplastique.

**5.** Procédé selon l'une quelconque des revendications 1 à 4, où la résistivité spécifique volumique de ladite résine thermoplastique se situe à $10^{14}$ $\Omega \cdot$cm ou plus.

**6.** Procédé selon la revendication 5, où la résistivité spécifique volumique de ladite résine thermoplastique se situe à $10^{16}$ $\Omega \cdot$cm ou plus.

**7.** Procédé selon l'une quelconque des revendications 1 à 6, où ledit liquide polaire est l'eau.

**8.** Procédé selon l'une quelconque des revendications 1 à 7, où ledit agent amplifiant la chargeabilité électrique est au moins un composé choisi parmi le groupe consistant en un composé amine encombrée, un sel métallique d'un acide gras, un oxyde métallique et un composé de poids moléculaire élevé et modifié par un acide carboxylique insaturé.

**9.** Procédé selon l'une quelconque des revendications 1 à 8, où le diamètre moyen desdites gouttelettes se situe à 15 $\mu$m ou moins.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0127371 A1

- US 5665278 A